# EUROPEAN PATENT SPECIFICATION

(11) **EP 2 097 654 B1**
(45) Date of publication and mention of the grant of the patent: **07.04.2010**
(21) Application number: 07825847.2
(22) Date of filing: 26.06.2007
(51) Int. Cl.: F16D 65/56

(54) **AUTOMATIC SLACK ADJUSTER FOR AN AUTOMOBILE DRUM BRAKE**
AUTOMATISCHER SPIELEINSTELLER FÜR EINE KRAFTFAHRZEUGTROMMELBREMSE
RATTRAPEUR D'USURE AUTOMATIQUE POUR UN FREIN À TAMBOUR D'AUTOMOBILE

(30) Priority: 30.06.2006 IT TO20060478
(43) Date of publication of application: 09.09.2009
(73) Proprietor: Raicam Industrie S.r.l., 65025 Manoppello Scalo (Pescara) (IT)
(72) Inventor: MATTIS, Enzo, I-10138 Torino (IT)
(74) Representative: Fioravanti, Corrado
(86) International application number: PCT/IB2007/052470
(87) International publication number: WO 2008/007275

(56) References cited:
- EP-A- 0 869 292
- GB-A- 2 060 094
- US-A- 4 148 380
- US-A- 4 729 457
- US-A- 5 295 561
- US-B1- 6 196 360

## Description

The present invention refers to an automatic slack adjuster for the shoes of an automobile drum brake, of the type defined in the preamble of claim 1. An adjuster of this type is known from US-4 729 457.

Different types of slack adjusters for drum brakes are currently known, adapted to ensure that in rest position the shoes of the brake are found at a predetermined and essentially constant distance from the facing drum walls, so that the shoes move a constant travel, also following partial wear thereof over time. The slack adjuster is mounted between the shoes and follows their spreading movement, being lengthened during the braking step and shortened during the subsequent return movement of the shoes.

When, due to wear, the shoes become thinner and their stroke against the walls of the drum tends to increase beyond a certain predetermined threshold, the adjuster automatically adjusts the rest position of the shoes, reaching a more extended rest position as a function of the achieved state of wear.

To automatically carry out an adjustment of this type, the slack adjusters transform the axial lengthening movement which occurs between their opposite ends bound to the shoes into a corresponding rotary movement of a screw and nut screw adjustment mechanism. This mechanism usually cooperates with a ratchet gear device which causes its partial unscrewing when axial travel of predetermined size is exceeded: such unscrewing brings the opposite ends of the adjuster apart and so brings the shoes close to their engagement surface on the drum, thus ensuring the maintenance of a constant stroke of the driving piston which controls the spreading apart of the shoes.

As is known, thermal expansion of the drum can lead to an over-adjustment of the mechanism when the drum is hot; if one allows this to occur, the backlash between the shoes and the drum may be cancelled, so that when the brake is cooled, the linings lock the wheels. Slack adjustment is therefore carried out at relatively low temperatures and is prevented at high temperatures. Temperature-sensitive bimetallic elements were proposed; associated with the ratchet gear device, the elements prevent the device from driving the screw and nut screw mechanism when the brake temperature exceeds a pre-established value.

The object of the present invention is to provide an automatic compensator of improved, reliable type, with simplified structure and limited production costs.

This and other objects and advantages, which will be better understood below, are achieved according to the invention by an automatic adjuster having the features defined in claim 1. Other important features are set forth in the dependent claims.

The features and advantages of the invention will be clear from the detailed description of several embodiments thereof made with reference to the attached drawings, given as indicative and non-limiting, wherein:
- Figure 1 is a longitudinal view of a first embodiment of a slack adjuster according to the present invention;
- Figure 2 is a view along the arrow II of figure 1;
- Figure 3 is a perspective view of a component of the adjuster of figures 1 and 2;
- Figure 4 is a view similar to figure 2, which represents the adjuster in a different operative position; and
- Figures 5-8 are longitudinal views of several alternative embodiments of the adjuster according to the invention.

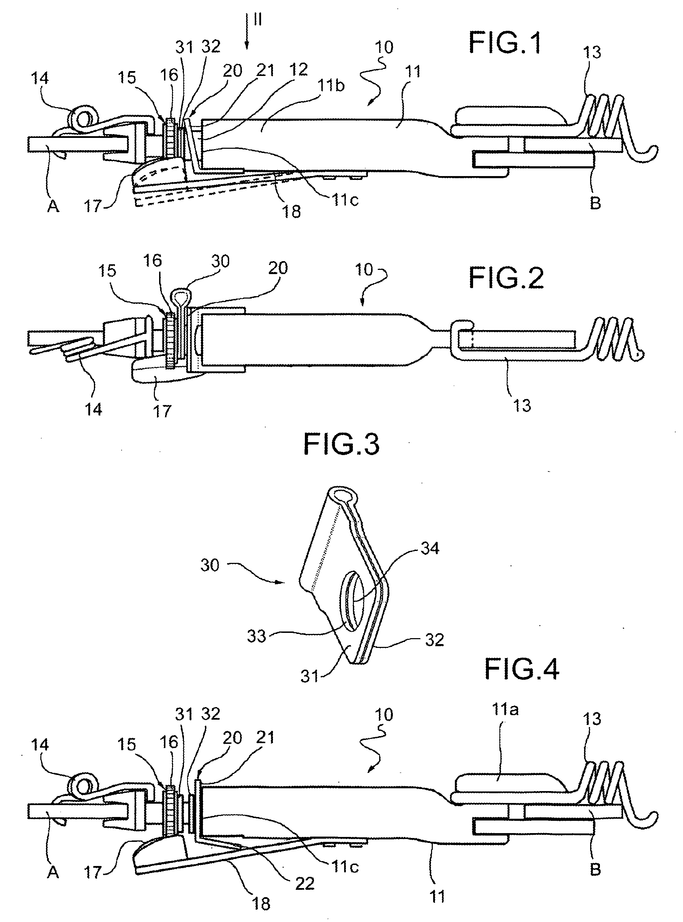

With initial reference to figures 1 and 2, a slack adjuster according to a first embodiment of the invention is indicated in its entirety with the number 10. The adjuster 10 has opposite ends adapted to be connected between two shoes A, B (only a small part of these illustrated) of a drum brake of a motor vehicle and near a hydraulic actuator (not shown) which, when driven, moves the two shoes apart, pressing them against the drum (not shown) of the brake.

The adjuster 10 comprises an elongated body or strut 11 made of a single metal piece, the right end of which is connectable to one of the shoes by means of a spring 13, while the left end 11b has an inner cavity which slidably receives the stem of a screw 12 of a screw and nut mechanism.

The screw and nut screw mechanism comprises the screw 12, which is connectable by means of a spring 14 to the left shoe, and a nut 15 which is engaged with the screw 12 and externally has teeth 16 to constitute a ratchet wheel of a ratchet gear. The teeth 16 cooperate with a pawl 17 borne by a flat spring 18 fixed projecting from the strut 11. The pawl 17 is mounted on the flat spring 18 or formed integrally with it and is maintained engaged in the teeth 16 of the nut; it can impart limited rotations to the nut screw co rresponding to bending movements of the flat spring 18. The spring 18 can be elastically deflected away from strut 11, by means of an obtuse angle lever 20 freely mounted on the screw 12 and interposed between the nut 15 and a transverse shoulder 11c of the strut 11. The lever 20 has a first arm 21 with a hole in which the screw is inserted 12, and a second arm 22 facing the flat spring 18.

A bimetallic element is indicated with 30 according to a first embodiment of the invention, separately illustrated in figure 3. The bimetallic element 30 is constructed from a U- or V-folded plate, so to form two facing extensions 31, 32 which have respective openings 33, 34 crossed by the screw 12 and aligned in a direction defined here as "axial". As seen in figure 2, the bimetallic element 30 is inserted on the screw 12 in a position interposed between the lever 20 and the nut screw 15.

When the brakes are at rest, a spring (not illustrated) which pulls the shoes towards each other, also pushes the strut 11 and the screw/nut mechanism towards each other. This compression holds the lever 20 in the position illustrated in figure 4, where the arm 22 deflects the flat spring 18.

When the brakes are driven, the shoes are moved away from each other and tend to move the strut 11 away from the screw mechanism 12, 15, permitting the lever 20 to accomplish a limited anticlockwise rotation. The pawl always remains engaged on one tooth of the ratchet gear, but it drives it only in certain conditions, as described below. Upon releasing the brakes, the two shoes once again come closer together and tend to axially compress the adjuster, permitting the flat spring 18 to move away from the strut.

If the wear level of the friction linings is not such to require an adjustment, in such conditions the braking cycles lead only to a limited relative axial movement between the strut and the screw and nut screw me chanism. The pawl, engaged on a tooth of the ratchet gear, slides along the ratchet gear, accomplishing small axial movements remaining engaged on one same ratchet gear tooth, without rotating it in an appreciable manner, or at most bringing about small oscillations of the nut with every braking cycle but without snapping onto another tooth, and thus without having varied the overall length of the adjuster at the end of the cycle.

If instead, due to the wear of the shoe linings, the axial movement of the compensator exceeds a predetermined threshold, the flat spring 18 is deflected, accomplishing a wider oscillation and making the nut ratchet wheel 15 rotate a greater angle, such that when the brake is released the pawl 17 snaps beyond one or more teeth 16 of the ratchet wheel in the only direction permitted. Consequently, during the extension step which occurs in the subsequent braking, the flat spring 18 slightly rotates the ratchet wheel 15 by means of the pawl 17. This corresponds to a partial unscrewing of the screw 12 from the nut rachet wheel 15, so that the adjuster acquires a more extended rest position than that preceding, with consequent restoration of the ideal rest position between the shoes and the drum.

The automatic adjustment described above does not occur when, in the presence of temperatures higher than a pre-established value, the two extensions 31, 32 of the bimetallic element are thermally spread apart and axially force the lever 20 against the strut 11 (figure 4). The arm 22 projecting from the lever holds the flat spring 18 in the deflected position, moved away from the strut 11, preventing the pawl from snapping onto the teeth of the ratchet gear and rotating the nut. Hence, when the brake is hot, during a braking cycle the relative sliding of the screw with respect to the strut does not lead to any rotation of the nut screw, and thus the length of the adjuster is not varied, regardless of the size of the movements which this undertakes. With the flat spring locked in such deflected condition, the strut 11 and the screw and nut screw mechanism freely slide, following the opening and closing movements of the respective shoes to which they are connected.

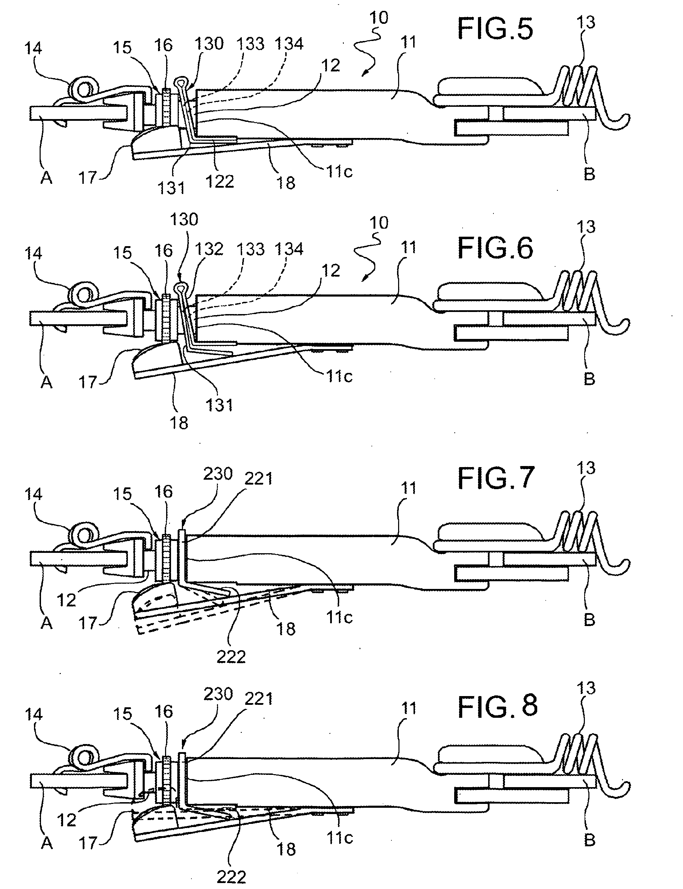

In the embodiment illustrated in figures 5 and 6, a single bimetallic element 130 also integrates therein the roles carried out by the lever 20 of the example of figures 1-4. The bimetallic element 130 consists of a U- or V-folded bimetallic plate, so to form two facing extensions 131, 132 which have respective openings 133, 134 which are axially aligned and crossed by the screw 12. The bimetallic element 130 is inserted on the screw 12 in a position interposed between the nut screw/ratchet wheel 15 and a transverse shoulder 11c of the strut 11. The extension 131 is folded at an obtuse angle and forms a section 122 facing the flat spring 18.

When the brake is hot, the extensions 131, 132 of the bimetallic element thermally spread open, so that the extension section 122 projects from the strut 11 and holds the flat spring 18 in the divaricated position illustrated in figure 6, preventing the pawl from snapping onto the teeth of the ratchet gear and rotating the nut screw.

According to a further particularly simplified embodiment (figures 7 and 8), the bimetallic element takes the shape of a lever 230 folded at an obtuse angle, freely mounted on the screw 12 and interposed between the nut 15 and the shoulder 11c of the strut. The lever 230 has a first arm 221 with a hole (not shown) in which the screw 12 is inserted, and a second arm 222 projecting towards the flat spring 18.

It is possible to choose between two opposite configurations of the layers composing the bimetallic element. In the example of figure 7, the side of the bimetallic element 230 turned away from the strut 11 is that which has the smallest expansion coefficient, so that when the brake is hot, the angle between the two arms 221 and 222 will increase to such an extent to move the flat spring 18 away from the strut 11, preventing the pawl 17 from driving the ratchet wheel 15 of the ratchet gear and therefore from lengthening the adjuster, similarly to the embodiments described above with reference to figures 1-6.

In the variant of figure 8, the side of the bimetallic element 230 facing the strut 11 is that having the smallest thermal expansion coefficient. In this case, the arm 222 has a "cold" position which is more spaced from the strut 11, so to permit the engagement of the pawl with the ratchet gear, and carry out the automatic adjustment if the shoe slack is excessive. When, on the other hand, the brake is hot, the angle between the two arms 221 and 222 diminishes, permitting the flat spring 18 to elastically approach the strut 11. Due to this movement, the pawl 17 causes a slight rotation of the ratchet wheel 15 in the unscrewing direction, but without snapping. The adjuster follows the movements of the shoes, but the relative axial movements between the strut 11 and the screw and nut mechanism do not cause any deflection of the flat spring and thus cannot cause any snapping of the pawl onto the teeth of the ratchet wheel.

As can be appreciated, the present invention permits reducing the number of components of the adjuster and simplifying its assembly, since the bimetallic element which inhibits the functioning of the ratchet gear is a simple bimetallic plate folded on the screw of the screw and nut mechanism. In the variants illustrated in figures 5-8, the lever 20 of figures 1-4 is also eliminated. It can also be appreciated that, with the present invention, precision working to form any locking seats of the bimetallic element is not required.

## Claims

1. An automatic slack adjuster for the shoes of a drum brake for automobiles, of the type comprising
- a strut (11) having one end connectable to a first shoe of the brake;
- a screw and nut screw mechanism comprising
a screw (12) slidably coupled to the strut and having one end connectable to a second shoe of the brake,
a nut (15) with an external toothing (16) constituting a ratchet wheel of a ratchet gear;
- a flat spring (18) fixed to the strut (11) and provided with a pawl (17) adapted to engage the teeth (16) of the ratchet wheel (15);
- a temperature-sensitive bimetallic means (30, 130, 230) adapted to prevent rotation of the ratchet wheel (15) when the temperature of the brake exceeds a predetermined value;
**characterised in that** the bimetallic means is a bimetallic plate mounted on the screw (12) in an intermediate position between the nut (15) and the strut (11) and folded into two extensions which define an angle which can vary as a function of the temperature in order to act on the flat spring (18) so to prevent rotation of the ratchet wheel when the temperature of the brake exceeds a pre-established value.

2. A slack adjuster according to claim 1, of the type comprising an obtuse angle lever (20) mounted on the screw (12) and interposed between the nut (15) and a transverse shoulder (11c) of the strut (11), the lever (20) having a first arm (21) with a hole in which the screw (12) is inserted, and a second arm (22) facing the flat spring (18), **characterised in that** the bimetallic plate (30) is inserted on the screw (12) in a position interposed between the lever (20) and the nut (15) and that the bimetallic plate (30) is U- or V-folded so to form two facing extensions (31, 32) having respective openings (33, 34) crossed by the screw (12).

3. A slack adjuster according to claim 1, **characterised in that**
the bimetallic plate (130) is U- or V-folded so to form two facing thermally spread-able extensions (131, 132) having respective openings (133, 134) which are axially aligned and crossed by the screw (12),
the bimetallic plate (130) is inserted on the screw (12) between the nut screw (15) and the strut (11), and that
one (13 1) of said extensions (131, 132) forms a projecting section (122) cooperating with the flat spring (18) to maintain this spring in a deflected position so as to prevent the pawl (17) from snapping onto the teeth (16) of the ratchet gear when the temperature of the brake exceeds said pre-established value.

4. A slack adjuster according to claim 3, **characterised in that** the projecting section (122) forms an obtuse angle with the rest of the extension (131), angle which can vary as a function of the temperature.

5. A slack adjuster according to claim 1, **characterised in that** the bimetallic plate (230) is a lever folded according to an angle which increases in width with the increase of the temperature, so to define
a first arm (221), interposed between the nut (15) and the strut (11), and having a hole in which the screw (12) is inserted, and
a second projecting arm (222) cooperating with the flat spring (18) to maintain this spring in an elastically deflected position away from the strut (11), whereby the flat spring (18) prevents the pawl (17) from snapping onto the teeth (16) of the ratchet gear when the temperature of the brake exceeds said pre-established value.

6. A slack adjuster according to claim 1, **characterised in that** the bimetallic plate (230) is a lever folded according to an angle which decreases in width with the increase of the temperature, so to define
a first arm (221), interposed between the nut (15) and the strut (11), and having a hole in which the screw (12) is inserted, and
a second projecting arm (222) cooperating with the flat spring (18) to permit this spring to reach a position closer to the strut (11), such that the relative axial movements between the strut (11) and the screw and nut mechanism which occur during the braking cycles do not cause deflection of the flat spring to an extent sufficient to case any snapping of the pawl onto the teeth of the ratchet wheel.

7. A slack adjuster according to any one of the preceding claims, **characterised in that** the bimetallic plate (30, 130, 230) is freely mounted on the screw (12).

8. A slack adjuster according to any one of the preceding claims, **characterised in that** the flat spring (18) and the pawl (17) are integrally formed.

## Patentansprüche

1. Automatikgestängesteller für die Schuhe einer Trommelbremse für Kraftfahrzeuge, von der Art, welche umfasst:
- eine Strebe (11) mit einem mit einem ersten Schuh der Bremse verbindbaren Ende,
- einen Schrauben- und Gewindemutterschraubenmechanismus, umfassend:
- eine Schraube (12), die gleitend mit der Strebe gekoppelt ist und ein mit einem zweiten Schuh der Bremse verbindbares Ende aufweist,
- eine Gewindemutter (15) mit einer externen Zahnung (16), welche ein Klinkenrad einer Klinkenvorrichtung bildet,
- eine Flachfeder (18), die an der Strebe (11) befestigt und mit einer Sperre (17) vorgesehen ist, welche geeignet ist, mit den Zähnen (16) des Klinkenrads (15) in Eingriff zu gelangen,
- temperaturempfindliche Bimetallmittel (30, 130, 230), die geeignet sind, eine Drehung des Klinkenrads (15) zu verhindern, wenn die Temperatur der Bremse einen vorbestimmten Wert überschreitet,
**dadurch gekennzeichnet, dass** die Bimetallmittel eine Bimetallplatte sind, die an der Schraube (12) in einer Zwischenposition zwischen der Gewindemutter (15) und der Strebe (11) befestigt und in zwei Ausleger gefaltet ist, welche einen Winkel definieren, der als eine Funktion der Temperatur variieren kann, um auf die Flachfeder (18) zu wirken, um so eine Drehung des Klinkenrads zu verhindern, wenn die Temperatur der Bremse einen vorbestimmten Wert überschreitet.

2. Gestängesteller nach Anspruch 1, von der Art, welche einen Sturnpfwinkelhebel (20) umfasst, der an der Schraube (12) befestigt und zwischen der Gewindemutter (15) und einer Querschulter (11c) der Strebe (11) angeordnet ist, wobei der Hebel (20) einen ersten Arm (21) mit einem Loch, in welchem die Schraube (12) eingefügt ist, und einen zweiten Arm (22), der der Flachfeder (18) zugewandt ist, aufweist, **dadurch gekennzeichnet, dass** die Bimetallplatte (30) an der Schraube (12) in eine Position zwischen dem Hebel (20) und der Gewindemutter (15) eingefügt ist, und dass die Bimetallplatte (30) U- oder V-gefaltet ist, um so zwei sich zugewandte Ausleger (31, 32) zu bilden, die jeweilige Öffnungen (33, 34) aufweisen, die von der Schraube (12) durchsetzt werden.

3. Gestängesteller nach Anspruch 1, **dadurch gekennzeichnet, dass**
- die Bimetallplatte (130) U- oder V-gefaltet ist, um so zwei sich zugewandte, thermisch spreizbare Ausleger (131, 132) zu bilden, welche jeweilige Öffnungen (133, 134) aufweisen, die axial ausgerichtet sind und von der Schraube (12) durchsetzt werden,
- die Bimetallplatte (130) an der Schraube (12) zwischen der Gewindemutterschraube (15) und der Strebe (11) eingefügt ist, und dass
- einer (131) der Ausleger (131, 132) einen vorstehenden Abschnitt (122) bildet, der mit der Flachfeder (18) zusammenwirkt, um diese Feder in einer ausgelenkten Position zu halten, um so die Sperre (17) daran zu hindern, mit den Zähnen (16) der Klinkenvorrichtung einzurasten, wenn die Temperatur der Bremse den vorbestimmten Wert überschreitet.

4. Gestängesteller nach Anspruch 3, **dadurch gekennzeichnet, dass** der vorstehende Abschnitt (122) einen stumpfen Winkel mit dem Rest des Auslegers (131) bildet, welcher Winkel als eine Funktion der Temperatur variieren kann.

5. Automatikgestängesteller nach Anspruch 1, **dadurch gekennzeichnet, dass** die Bimetallplatte (230) ein Hebel ist, der gemäß einem Winkel gefaltet ist, der in Weite mit einer Zunahme der Temperatur zunimmt, um so zu definieren:
- einen ersten Arm (221), der zwischen der Gewindemutter (15) und der Strebe (11) angeordnet ist und ein Loch aufweist, in welches die Schraube (12) eingefügt ist, und
- einen zweiten vorstehenden Arm (222), der mit der Flachfeder (18) zusammenwirkt, um diese Feder in einer elastisch ausgelenkten Position weg von der Strebe (11) zu halten, wobei die Flachfeder (18) die Sperre (17) hindert, mit den Zähnen (16) der Klinkenvorrichtung einzurasten, wenn die Temperatur der Bremse den vorbestimmten Wert überschreitet.

6. Gestängesteller nach Anspruch 1, **dadurch gekennzeichnet, dass** die Bimetallplatte (230) ein Hebel ist, der gemäß einem Winkel gefaltet ist, welcher in Weite mit der Zunahme der Temperatur zunimmt, um so zu definieren:
- einen ersten Arm (221), der zwischen der Gewindemutter (15) und der Strebe (11) angeordnet ist und ein Loch aufweist, in welches die Schraube (12) eingefügt ist, und
- einen zweiten vorstehenden Arm (222), der mit der Flachfeder (18) zusammenwirkt, um es dieser Feder zu erlauben, eine Position näher an der Strebe (11) zu erreichen, so dass die relativen axialen Bewegungen zwischen der Strebe (11) und dem Schrauben- und Gewindemuttermechanismus, welche während der Bremszyklen auftreten, keine Auslenkung der Flachfeder in einem Maß bewirken, das ausreichend ist, um ein Einrasten der Sperre mit den Zähnen des Klinkenrades zu bewirken.

7. Gestängesteller nach einem der vorhergehenden Ansprüche, **dadurch gekennzeichnet, dass** die Bimetallplatte (30, 130, 230) frei an der Schraube (12) befestigt ist.

8. Gestängesteller nach einem der vorhergehenden Ansprüche, **dadurch gekennzeichnet, dass** die Flachfeder (18) und die Sperre (17) integral ausgebildet sind.

## Revendications

1. Ajusteur de jeu automatique pour les sabots d'un frein à tambour pour automobiles, du type comprenant :
une entretoise (11) ayant une extrémité pouvant se raccorder à un premier sabot du frein ;
un mécanisme de vis et de vis à écrou comprenant :
une vis (12) couplée de manière coulissante à l'entretoise et ayant une extrémité pouvant se raccorder à un second sabot du frein ;
un écrou (15) avec des dents externes (16) constituant une roue à cliquet d'un engrenage à cliquet ;
un ressort plat (18) fixé sur l'entretoise (11) et prévu avec un cliquet (17) adapté pour mettre en prise les dents (16) de la roue à cliquet (15) ;
des moyens bimétalliques sensibles à la température (30, 130, 230) adaptés pour empêcher la rotation de la roue à cliquet (15) lorsque la température du frein dépasse une valeur prédéterminée ;
**caractérisé en ce que** les moyens bimétalliques sont une plaque bimétallique montée sur la vis (12) dans une position intermédiaire entre l'écrou (15) et l'entretoise (11) et pliée en deux extensions qui définissent un angle qui peut varier en fonction de la température afin d'agir sur le ressort plat (18) pour empêcher la rotation de la roue à cliquet lorsque la température du frein dépasse une valeur préétablie.

2. Ajusteur de jeu selon la revendication 1, du type comprenant un levier à angle obtus (20) monté sur la vis (12) et intercalé entre l'écrou (15) et un épaulement transversal (11c) de l'entretoise (11), le levier (20) ayant un premier bras (21) avec un trou dans lequel la vis (12) est insérée, et un second bras (22) faisant face au ressort plat (18), **caractérisé en ce que** la plaque bimétallique (30) est insérée sur la vis (12) dans une position intercalée entre le levier (20) et l'écrou (15) et **en ce que** la plaque bimétallique (30) est pliée en forme de U ou de V afin de former deux extensions se faisant face (31, 32) ayant des ouvertures (33, 34) respectives traversées par la vis (12).

3. Ajusteur de jeu selon la revendication 1, **caractérisé en ce que** la plaque bimétallique (130) est pliée en forme de U ou de V pour former deux extensions se faisant face thermiquement expansibles (131, 132) ayant des ouvertures (133, 134) respectives qui sont alignées de manière axiale et traversées par la vis (12),
la plaque bimétallique (130) est insérée sur la vis (12) entre la vis à écrou (15) et l'entretoise (11) et **en ce que** :
l'une (131) desdites extensions (131, 132) forme une section en saillie (122) coopérant avec le ressort plat (18) afin de maintenir ce ressort dans une position déviée afin d'empêcher le cliquet (17) de s'encliqueter sur les dents (16) de l'engrenage à cliquet lorsque la température du frein dépasse ladite valeur préétablie.

4. Ajusteur de jeu selon la revendication 3, **caractérisé en ce que** la section en saillie (122) forme un angle obtus avec le reste de l'extension (131), dont l'angle peut varier en fonction de la température.

5. Ajusteur de jeu selon la revendication 1, **caractérisé en ce que** la plaque bimétallique (230) est un levier plié selon un angle qui augmente en largeur avec l'augmentation de la température, afin de définir:
un premier bras (221), intercalé entre l'écrou (15) et l'entretoise (11) et ayant un trou dans lequel la vis (12) est insérée, et
un second bras en saillie (222) coopérant avec le ressort plat (18) afin de maintenir ce ressort dans une position élastiquement déviée à distance de l'entretoise (11), moyennant quoi le ressort plat (18) empêche le cliquet (17) de s'encliqueter sur les dents (16) de l'engrenage à cliquet lorsque la température du frein dépasse ladite valeur préétablie.

6. Ajusteur de jeu selon la revendication 1, **caractérisé en ce que** la plaque bimétallique (230) est un levier plié selon un angle qui diminue en largeur avec l'augmentation de la température, afin de définir :
un premier bras (221) intercalé entre la vis (15) et l'entretoise (11) et ayant un trou dans lequel la vis (12) est insérée, et
un second bras en saillie (222) coopérant avec le ressort plat (18) pour permettre à ce ressort d'atteindre une position plus proche de l'entretoise (11), de sorte que les mouvements axiaux relatifs entre l'entretoise (11) et le mécanisme de vis et d'écrou qui peuvent se produire pendant les cycles de freinage ne provoquent pas la déflexion du ressort plat sur une étendue suffisante pour provoquer un encliquetage du cliquet sur les dents de la roue à cliquet.

7. Ajusteur de jeu selon l'une quelconque des revendications précédentes, **caractérisé en ce que** la plaque bimétallique (30, 130, 230) est montée librement sur la vis (12).

8. Ajusteur de jeu selon l'une quelconque des revendications précédentes, **caractérisé en ce que** le ressort plat (18) et le cliquet (17) sont formés de manière solidaire.
